# FASCICULE DE BREVET EUROPEEN

(11) **EP 3 463 959 B1**
(45) Date de publication et mention de la délivrance du brevet: **27.04.2022**
(21) Numéro de dépôt: 17731223.8
(22) Date de dépôt: 23.05.2017
(51) Int. Cl.: B60K 11/08

(54) **ORGANE DE FERMETURE DE PALIER POUR SYSTÈME DE GESTION D'UNE ENTRÉE D'AIR ET MODULE DE FACE AVANT POUR VÉHICULE AUTOMOBILE**
LAGER-VERSCHLUSSELEMENT FÜR LUFTEINLASSREGELSYSTEM UND FRONTENDMODUL FÜR KRAFTFAHRZEUG
BEARING CLOSURE MEMBER FOR AIR INLET SHUTTER SYSTEM AND FRONT END MODULE FOR MOTOR VEHICLE

(30) Priorité: 27.05.2016 FR 1654759
(43) Date de publication de la demande: 10.04.2019
(73) Titulaire: Valeo Systemes Thermiques-THS, 78322 Le Mesnil Saint Denis Cedex (FR)
(72) Inventeur: GERBER, Sylvain, 78322 Le Mesnil Saint Denis Cedex (FR); MITIDIERI, Enzo, 78322 Le Mesnil Saint Denis Cedex (FR)
(74) Mandataire: Valeo Systèmes Thermiques
(86) Numéro de dépôt international: PCT/FR2017/051270
(87) Numéro de publication internationale: WO 2017/203157

(56) Documents cités:
- DE-A1-102010 056 050
- FR-A1- 2 923 758
- FR-A1- 3 010 502
- US-A1- 2007 243 818

## Description

L'invention a pour objet un système de gestion d'une entrée d'air pour face avant de véhicule automobile et en particulier un organe de fermeture de palier.

Un tel système comprend généralement au moins un volet et un dispositif de commande de déplacement dudit au moins un volet entre une position d'obturation de l'entrée d'air et au moins une position d'ouverture de l'entrée d'air.

Un tel système est le plus souvent désigné par l'acronyme AGS, provenant de l'expression de langue anglaise "Active Grille Shutter".

Le système de gestion d'une entrée d'air est de préférence installé au niveau d'une calandre du véhicule automobile.

En position d'ouverture de l'entrée d'air, l'air circule à travers la calandre vers l'intérieur du véhicule et participe au refroidissement du moteur du véhicule automobile, notamment par l'intermédiaire d'un ou plusieurs échangeurs de chaleur situés sur la face avant du véhicule.

En position d'obturation de l'entrée d'air, l'air ne pénètre pas *via* la calandre ce qui réduit la traînée et permet ainsi de réduire la consommation de carburant et l'émission de dioxyde de carbone.

Le système de gestion d'entrée d'air permet donc de réduire la consommation d'énergie et la pollution lorsque le moteur n'a pas besoin d'être refroidi par l'air extérieur.

Généralement, chaque volet est muni d'un pion de pivotement dudit au moins un volet, le système comportant un support pourvu d'au moins un palier configuré pour recevoir le pion de pivotement ainsi qu'un organe de fermeture de palier.

Le pivotement du pion dans le palier permet le passage de la position d'ouverture à la position d'obturation, et inversement de la position d'obturation à la position d'ouverture.

Toutefois, l'intégralité du flux d'air passant par l'entrée d'air ne traverse pas le ou les échangeurs de chaleur. En effet, la présence d'interstices situés entre le premier échangeur de chaleur et la calandre force partiellement le flux d'air à contourner l'échangeur de chaleur diminuant ainsi le refroidissement du moteur. Ces interstices résultent du fait que les organes de fermeture de palier sont réalisés en matériau rigide de manière à maintenir les volets au sein des paliers.

Un système de gestion d'une entrée d'air pour face avant de véhicule automobile est connu du document FR 3 010 502 A1.

Le but de l'invention est de remédier à cet inconvénient.

A cet effet, l'invention a pour objet un système de gestion d'une entrée d'air selon la revendication 1.

Ainsi, l'organe de fermeture de palier permet de guider l'air de manière à ce que l'intégralité du flux d'air passant par l'entrée d'air traverse le ou les échangeurs de chaleur. En étant réalisé en deux matériaux, l'armature, réalisée en un matériau rigide, maintient le volet au sein du palier tandis que le guide d'air, réalisé en un matériau plus souple, dirige le flux d'air de manière optimale vers les échangeurs de chaleur.

D'autres modes de réalisation de l'organe de fermeture de palier proposent que :
- le guide d'air est porté par l'armature ;
- la partie réalisée en matériau plus souple est disposée à l'opposée de la jonction entre l'armature et le guide d'air ;
- le guide d'air est surmoulé sur l'armature ;
- l'intégralité du guide d'air est réalisée en matériau plus souple que celui de l'armature ;
- le guide d'air comporte en outre une partie réalisée en un matériau plus rigide que la partie réalisée en un matériau plus souple ;
- le guide d'air présente une forme de plaque ;
- la forme de la plaque est plane en dehors de toute contrainte mécanique ;
- le guide d'air présente un coude ;
- le guide d'air est de forme polygonale ;
- le guide d'air est de forme rectangulaire, trapézoïdale ou parallélipédique ;
- le guide d'air a une épaisseur comprise entre 1 et 10 mm ;
- l'armature est réalisée en un plastique rigide, en particulier du polypropylène ;
- le guide d'air est réalisé en un matériau choisi parmi :
   - élastomère thermoplastique, en particulier élastomère thermoplastique oléfinique,
   - un mélange d'élastomère thermoplastique comprenant de l'éthylène-propylène-diène monomère,
   - du caoutchouc
   - et/ou tout autre élastomère souple ;
- l'armature comporte un corps allongé sur lequel est disposé le guide d'air ;
- l'armature comporte une tête de fixation pour permettre la fixation de l'armature sur le système de gestion d'une entrée d'air.

L'invention concerne également un module de face avant comprenant un échangeur de chaleur et un encadrement portant ledit échangeur de chaleur. Selon l'invention, le module comprend un système de gestion d'une entrée d'air tel que décrit précédemment. D'autres modes de réalisation du module de face avant proposent que :
- le guide d'air est agencé pour venir en butée contre l'échangeur de chaleur ;
- le guide d'air est agencé pour venir en butée contre la boite collectrice de l'échangeur de chaleur ;
- le guide d'air est agencé pour venir en butée contre le faisceau de l'échangeur de chaleur ;
- le guide d'air est agencé pour venir en butée contre le encadrement du module de face avant.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue de haut d'un module de face avant pour véhicule automobile selon l'art antérieur ;
- la figure 2 illustre une vue en perspective d'un système de gestion d'une entrée d'air selon une vue de face ;
- la figure 3 illustre une vue en perspective d'un système de gestion d'une entrée d'air selon une vue de dos ;
- la figure 4 illustre une vue en perspective de l'organe de fermeture de palier selon l'invention ;
- la figure 5 illustre une vue en perspective du système de gestion d'une entrée d'air selon l'invention selon une vue de dos ;
- la figure 6 illustre une vue partielle du module de face avant pour véhicule automobile selon l'invention selon une vue de haut ;
- la figure 7 illustre une vue partielle du module de face avant pour véhicule automobile selon un autre mode de réalisation selon une vue de haut.

Dans la description, des éléments identiques sont identifiés par les mêmes numéros de référence.

Dans la présente description, on entend par « en amont » qu'un élément est placé avant un autre par rapport au sens de circulation du flux d'air. A contrario, on entend par « en aval » qu'un élément est placé après un autre par rapport au sens de circulation du flux d'air. Par supérieur, inférieur, haut et bas, on se réfère à la disposition des éléments sur les figures, ce qui correspond généralement à la disposition des éléments à l'état monté dans un véhicule automobile.

Les directions longitudinale (L), transversale (T) et hauteur (H) correspondent aux directions x-y-z du véhicule.

L'invention a pour objet un système de gestion d'une entrée d'air pour face avant de véhicule automobile.

Le système de gestion d'une entrée d'air est de préférence installé au niveau d'une calandre du véhicule automobile, et permet de contrôler un flux d'air traversant le module de face avant du véhicule, y compris le compartiment moteur du véhicule.

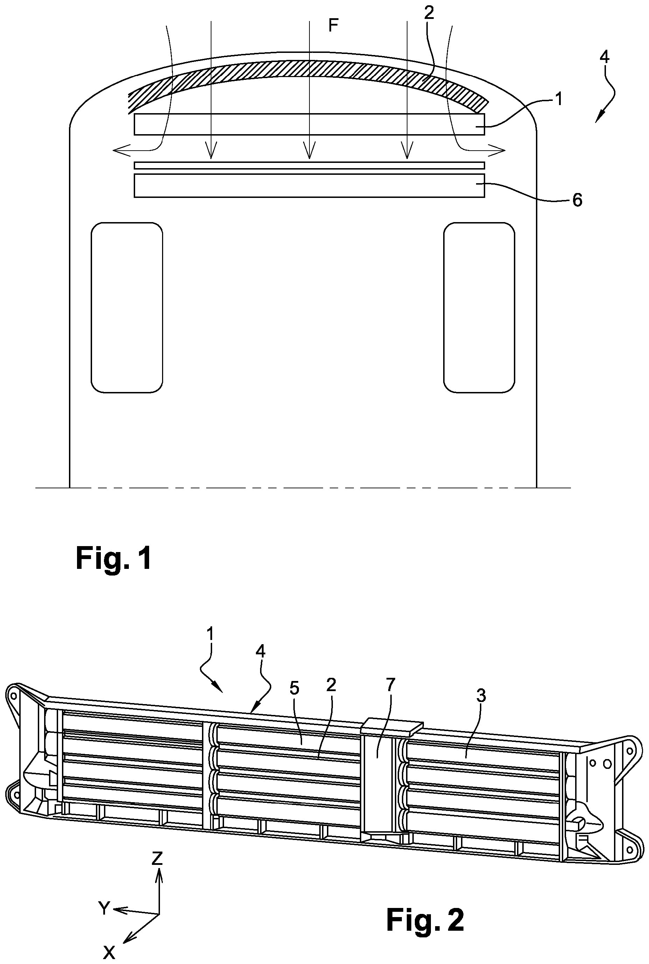

Comme illustré sur les figures 1 et 2, le système de gestion est référencé 1, tandis que l'entrée d'air est référencée 2. L'entrée d'air 2 permet le passage d'un flux d'air F extérieur vers l'intérieur du véhicule notamment vers le compartiment moteur.

Afin de réduire le coefficient de trainée, le véhicule 4 est équipé d'un système de gestion 1 de l'entrée d'air 2. Ce système est apte à permettre le passage du flux d'air F vers l'intérieur du véhicule, notamment vers des échangeurs de chaleur 6 qui favorisent le refroidissement du moteur, on dit alors que le dispositif est en position d'ouverture. De même, si le moteur n'a pas besoin d'être refroidi, le système de gestion 1 de l'entrée d'air 2 est également apte à faire obstruction au passage du flux d'air F, on dit alors que le système de gestion 1 de l'entrée d'air 2 est en position de fermeture.

Toutefois, comme illustré sur la figure 1, lorsque le système de gestion 1 de l'entrée d'air est en position d'ouverture, le flux d'air F n'est pas acheminé vers les échangeurs de chaleur 6 dans son intégralité. En effet, de par la présence d'interstices situés entre le système de gestion 1 de l'entrée d'air 2 et les échangeurs de chaleur 6, une partie du flux d'air F est déviée vers les côtés latéraux des échangeurs de chaleur 6, ce qui résulte dans un refroidissement moins efficace du moteur.

Sur le mode de réalisation illustré à la figure 2, le système de gestion 1 de l'entrée d'air 2 comprend au moins un volet 3, et également un cadre 4 de maintien, de préférence rigide et de forme générale rectangulaire, de la pluralité de volets 3.

Le cadre 4 délimite l'entrée d'air 2 que les volets 3 ouvrent ou obturent, comme il va être détaillé ultérieurement.

Sur la figure 2, les volets 3 sont disposés parallèlement les uns au-dessous des autres.

Bien entendu, l'invention ne se limite pas au mode de réalisation illustré, et, en particulier, le nombre de volets et la position des volets les uns relativement aux autres peuvent varier.

Chaque volet 3 comprend une surface de travail 5.

Par exemple, la surface de travail 5 est un panneau de forme générale rectangulaire plane.

Bien entendu, l'invention ne se limite pas aux volets rectangulaires plans, et d'autres configurations sont tout à fait envisageables.

Chaque volet 3 comprend un arbre solidaire de la surface de travail 5 qui s'étendent sensiblement horizontalement par rapport au cadre 4. L'arbre du volet 3 correspond à l'axe de rotation dudit volet.

Chaque volet 3 est monté pivotant entre deux positions extrêmes, une position d'obturation de l'entrée d'air 2 et une position d'ouverture maximale de l'entrée d'air 2.

Dans la position d'obturation de l'un des volets 3, encore appelée position de fermeture, la surface de travail 5 couvre au moins une partie de l'entrée d'air 2. Ainsi, lorsque tous les volets 3 sont en position d'obturation, le flux d'air F ne passe pas par l'entrée d'air 2.

Dans la position d'ouverture maximale, la surface de travail s'étend de manière à former un angle perpendiculaire avec une surface virtuelle plane de l'entrée d'air 2 de manière à ce que le débit de flux d'air F traversant l'entrée d'air 2 soit maximal.

Les volets 3 sont aptes à pivoter entre ces deux positions et adopter toute position intermédiaire, autrement dit une position d'ouverture où la surface de travail 5 forme un angle non nul avec une surface virtuelle plane de l'entrée d'air 2, ce qui permet au flux d'air F de traverser l'entrée d'air 2.

Comme visible sur la figure 2, le système de gestion 1 comprend également un dispositif de commande 7 de déplacement du ou des volets 3 qui est avantageusement un actionneur.

Selon la variante de réalisation illustrée, un unique actionneur 7 commande tous les volets 3.

Avantageusement, le système de gestion 1 comprend une cinématique de manière à ce que tous les volets 3 du système de gestion 1 aient un déplacement identique, telle une bielle mobile.

Toutefois, l'invention ne se limite pas à ce cas et il est envisageable de prévoir des volets dont les déplacements ne sont pas identiques.

Dans une des positions d'ouverture des volets 3, l'entrée d'air 2 est traversée par un flux d'air F. Cette position est particulièrement avantageuse quand le moteur du véhicule nécessite un refroidissement important.

Dans la position d'obturation des volets 3, l'entrée d'air 2 est complètement fermée par les surfaces de travail 5. Cette position est particulièrement avantageuse quand le véhicule roule à vitesse élevée puisque l'obturation de l'entrée d'air 2 améliore l'aérodynamisme du véhicule automobile et de ce fait permet une réduction de la consommation d'essence.

En cela, les volets 3 peuvent être qualifiés de volets de réduction de coefficient de traînée du véhicule automobile.

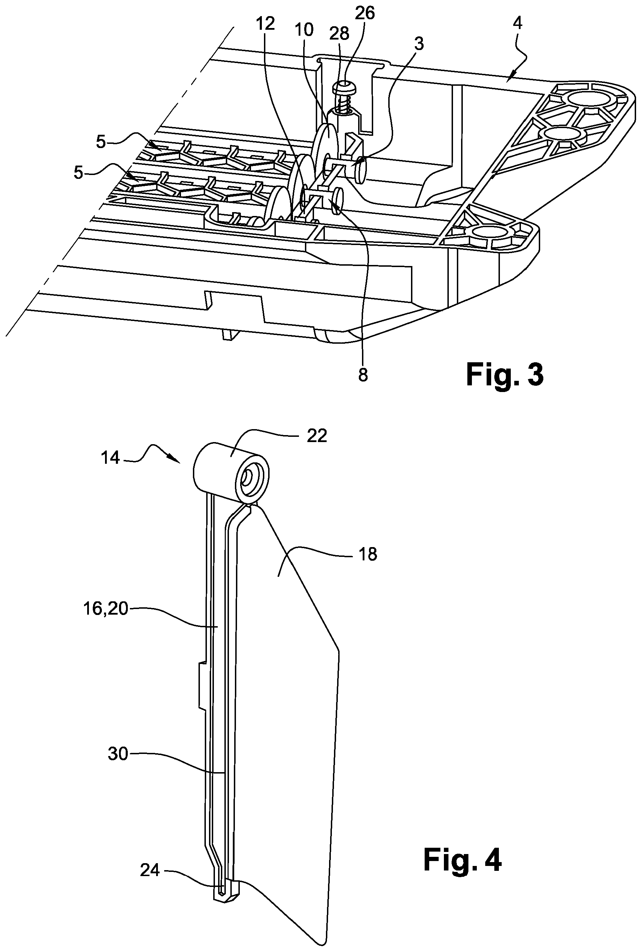

Comme visible sur la figure 3, chaque volet 3 comprend un arbre 8, ou pion de pivotement, s'étendant de préférence depuis un disque 10 solidaire d'une extrémité de la surface de travail 5, dans le prolongement de l'arbre, ou axe de rotation, du volet.

Comme également visible sur la figure 3, le système de gestion 1, et notamment le cadre 4, comprend un support 12 pourvu de cavités formant paliers, chaque palier est configuré pour recevoir un arbre 8 de l'un des volets 3.

Le pivotement de chaque arbre 8 dans le palier associé permet le pivotement de la surface de travail 5 entre la position d'obturation et la ou les positions d'ouvertures.

Le système de gestion 1 comprend en outre un organe 14 de fermeture de palier du support 12, tel qu'illustré à la figure 4. L'organe 14 de fermeture de palier, couramment appelé « clamp » (traduit de l'anglais pour un élément de serrage), comprend deux éléments, une armature 16 et un guide d'air 18.

L'armature 16 correspond à l'élément de l'organe 14 de fermeture de palier venant en appui contre le support 12 de manière à fermer les paliers.

L'armature 16 est réalisée en un plastique rigide, comme par exemple du Polypropylène (PP) ou tout autre plastique dur, de manière à être résistant et de mieux maintenir les volets 3 au sein du système de gestion 1 de l'entrée d'air 2. L'armature comprend un corps allongé 20, tel une tige, ayant deux extrémités opposées.

La première extrémité comporte une tête de fixation 22 pour permettre la fixation de l'organe 14 de fermeture de palier sur le système de gestion 1, en particulier sur le cadre 4. La tête de fixation 22 peut par exemple comprendre un cylindre comportant un filetage dans lequel peut passer une vis 26, illustrée en figure 3. Le cadre 4, et en particulier le support 12, du système de gestion 1 comprend aussi un élément fileté 28, figure 3, pour accueillir la vis 26 après qu'elle ait traversé la première extrémité 22, permettant ainsi de fixer l'armature 16 contre le support 12. En d'autres termes, la vis 26 traverse le pas-de-vis du cylindre, ou la première extrémité 22, puis est accueillie au sein du support 12, fixant ainsi l'armature contre le support 12.

La seconde extrémité correspond à un doigt 24 apte à s'introduire dans une encoche, ou orifice, située au niveau du cadre 4 de manière aussi à fixer l'armature 16 contre le support 12.

Le guide d'air 18 correspond à l'élément de l'organe 14 de fermeture de palier dirigeant le flux d'air F de manière optimale vers les échangeurs de chaleur.

Au moins une partie du guide d'air 18 est réalisée en un matériau plus souple que celui de l'armature 16, comme par exemple des élastomères thermoplastiques (TPE), des élastomères thermoplastiques oléfiniques (TPO), du TPE comprenant de l'éthylène-propylène-diène monomère (EPDM), du caoutchouc, et/ou tout autre élastomère souple. Le guide d'air 18 peut aussi comporter en outre une partie réalisée en un matériau plus rigide que la partie réalisée en un matériau plus souple que l'armature 16. Bien évidemment, l'intégralité du guide d'air 18 peut être réalisée en un matériau plus souple que celui de l'armature 16.

Le guide d'air 18 est porté par l'armature 16 en raison de sa rigidité, au niveau d'une zone, dite jonction 30, où le guide d'air 18 et l'armature 16 sont solidaires.

La partie du guide d'air 18 réalisée en un matériau plus souple est disposée à l'opposé de la jonction 30 entre l'armature 16 et le guide d'air 18.

La jonction 30 peut, par exemple, être réalisée par surmoulage du guide d'air 18 sur l'armature 16. Il est également possible d'agencer une rainure dans le corps 20 de l'armature 16 et une nervure sur le guide d'air 18 puis de glisser la nervure au sein de la rainure.

Le guide d'air 18 est sous la forme d'une plaque, autrement dit, sous la forme d'une pièce aplatie, relativement rigide et de faible épaisseur comprise entre 1 et 10 mm, de manière à pouvoir guider le flux d'air F vers les échangeurs de chaleur en créant le moins de pertes de charges possible.

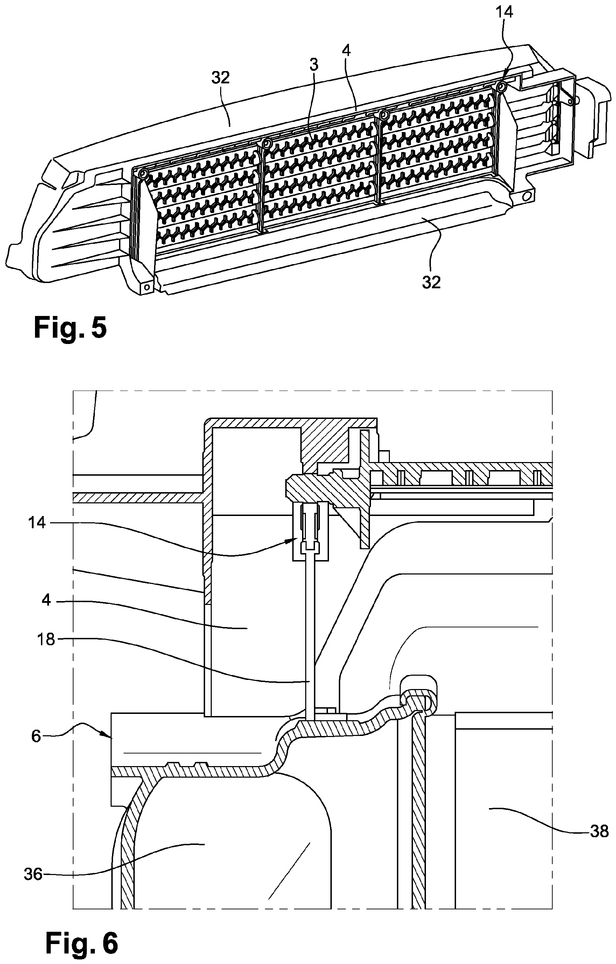

L'épaisseur du guide d'air 18 est selon le mode de réalisation illustré à la figure 6 constante sur toute la longueur du guide d'air 18.

Selon un mode de réalisation non illustré, l'épaisseur du guide d'air 18 peut également être variable, en particulier être croissance où le guide à une épaisseur de 1 mm au niveau de la jonction 30 entre le guide d'air 18 et l'armature 16 puis augmenter jusqu'à l'extrémité du guide d'air opposée à la jonction 30, le guide d'air 18 ayant une épaisseur de 10 mm à cette dite extrémité, ceci afin de mieux guider l'air vers les échangeurs de chaleur 6.

Le guide d'air 18, en particulier ladite plaque, est de forme polygonale, à savoir de forme rectangulaire, trapézoïdale ou encore parallélipédique. Ces formes présentant de grandes surfaces particulièrement adaptées pour guider le flux d'air F.

L'invention concerne également un système de gestion 1 d'une entrée d'air 2 comprenant un tel organe 14 de fermeture de palier. Comme illustré à la figure 5, le système de gestion 1 de l'entrée d'air 2 selon l'invention comprend un cadre 4 et au moins un volet 3. Le cadre 4 comprend au moins deux supports 12 pourvus de cavités, ou de logement, formant ainsi un palier, chaque palier étant configuré pour recevoir une extrémité de l'arbre 8 du volet, et un organe 14 de fermeture de palier tel que décrit précédemment.

L'organe 14 de fermeture de palier est monté sur le cadre 4, et plus particulièrement il peut être clippé ou vissé sur le cadre 4.

Le système de gestion 1 de l'entrée d'air 2 selon l'invention comprend au moins deux organes 14 de fermeture de palier, tels que décrits précédemment, identiques agencés de part et d'autre du cadre 4, et notamment agencés aux extrémités dans le sens transversal, ou la largeur, du cadre 4.

Selon le mode de réalisation illustré à la figure 5, le système de gestion 1 selon l'invention comprend quatre organes 14 de fermeture de palier destiné à être fixé sur le cadre 4 au niveau des quatre supports 12 complémentaires, chacun étant pourvus de cavités. Ici, les quatre organes 14 de fermeture de palier sont répartis de manière équidistante des uns des autres dans le sens transversal du cadre 4. Ainsi, deux organes 14 de fermeture de palier sont situés vers le centre du cadre 4, tandis que deux organes 14 de fermeture de palier sont situés au niveau des extrémités du cadre 4. Les deux organes 14 de fermeture de palier situés vers le centre comprennent une armature 16 mais pas de guide d'air 18. Les deux organes 14 de fermeture de palier situés au niveau des extrémités du cadre 4 comprennent une armature 16 ainsi qu'un guide d'air 18 tel que décrit précédemment.

Le système de gestion 1 de l'entrée d'air 2 selon l'invention comprend en outre au moins un guide d'air 32 fixé sur la paroi inférieure et/ou supérieure du cadre, ceci également dans l'optique de mieux guider le flux d'air F vers les échangeurs de chaleur 6. Le guide d'air 32 correspond à une gaine ou enveloppe en matériau souple, tel que du caoutchouc, qui peut être surmoulé ou clippé sur le cadre 4. Le guide d'air 32 peut être agencé en amont par rapport au flux d'air F du cadre 4 et/ou en aval du cadre 4.

L'invention concerne également un module de face avant pour véhicule automobile comprenant un tel système de gestion 1. Ledit module de face avant comprend en outre un encadrement (aussi appelé bolster) portant au moins un échangeur de chaleur 6.

Comme illustré à la figure 6, le guide d'air 18 de l'organe 14 de fermeture de palier est agencé pour venir en butée contre l'échangeur de chaleur 6. Ceci est particulièrement avantageux car la souplesse du matériau du guide d'air 18 permet d'absorber les chocs liés à l'échangeur de chaleur 6, notamment les vibrations, dilatation ou dispersions. De plus, la souplesse du matériau du guide d'air 18 permet une légère déformation du guide d'air 18 lorsque celui-ci vient en appui contre l'échangeur de chaleur 6. Ceci permet d'améliorer l'étanchéité du module de face avant en bouchant tous les interstices présents entre le système de gestion 1 et l'échangeur de chaleur 6.

Le guide d'air 18 a donc la forme d'une plaque plane en dehors de toutes contraintes mécaniques, c'est-à-dire lorsque qu'il n'est pas en butée contre l'échangeur de chaleur 6. Toutefois, lorsque le guide d'air 18 vient en appui contre l'échangeur de chaleur 6, le guide d'air 18 est alors légèrement déformé améliorant ainsi l'étanchéité de l'ensemble.

L'échangeur de chaleur 6 comprend deux parties, un faisceau thermique 38 correspondant à une zone d'échanges thermiques entre le flux d'air F et le fluide circulant au sein de l'échangeur de chaleur, et au moins une boîte collectrice 36 correspondant à une zone de collecte du fluide ayant traversé le faisceau thermique 38. La boite collectrice 36 est généralement sous la forme d'un boitier en plastique tandis que le faisceau thermique 38 est sous la forme d'un empilement de plaques ou tubes métalliques.

L'échangeur de chaleur 6 peut par exemple correspondre à un condenseur ou encore à un refroidisseur d'air de suralimentation.

Selon le mode illustré à la figure 6, le guide d'air 18 est agencé pour venir en butée contre la boite collectrice 36 de l'échangeur de chaleur 6. La distance, ou profondeur entre le système de gestion 1 et l'échangeur de chaleur 1, tout comme la longueur du guide d'air, est comprise entre 5 et 20 mm.

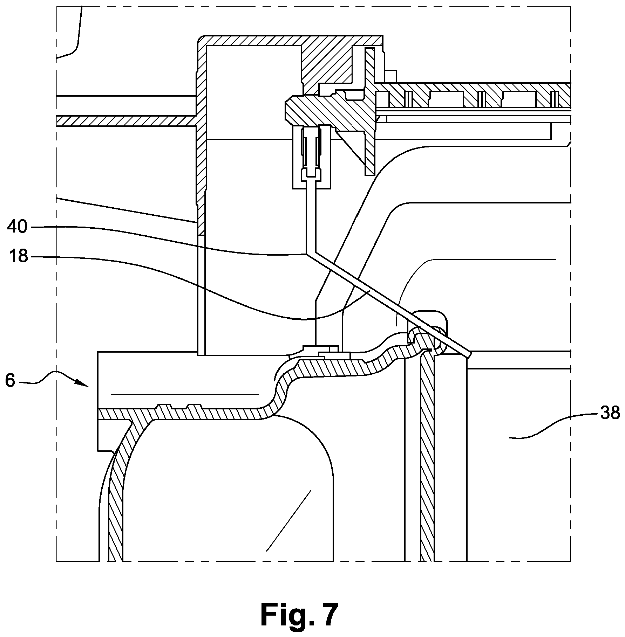

Selon le mode illustré à la figure 7, de face, le guide d'air 18 est agencé pour venir en butée contre le faisceau thermique 38 de l'échangeur de chaleur 6. De cette manière l'intégralité du flux d'air F est dirigée vers la zone d'échange thermique, éliminant ainsi tout volume mort entre le système de gestion 1 de l'entrée d'air 2 et l'échangeur de chaleur 6.

Toujours selon le mode de réalisation illustré à la figure 7, le guide d'air 18 présente un coude 40, autrement dit un angle saillant compris dans un intervalle suivant : ]0° ;70°], ceci également pour diriger l'intégralité du flux d'air F vers la zone d'échange thermique.

Selon un mode de réalisation non illustré, le guide d'air 18 est agencé pour venir en butée contre l'encadrement de la face avant.

Le système de gestion selon la présente invention présente de nombreux avantages, et en particulier le guidage optimal du flux d'air F vers les échangeurs de chaleur avec une solution simple à mettre en oeuvre et économique. De plus, de tels organes de fermeture de paliers peuvent s'adapter à tout type d'Active Grille Shutters ce qui résout aussi les problèmes de standardisation.

## Revendications

1. Système (1) de gestion d'une entrée d'air (2) pour face avant de véhicule automobile comprenant un cadre (4) et au moins un volet (3), le cadre (4) comprenant au moins un palier configuré pour recevoir un arbre (8) du volet (3), **caractérisé en ce qu'**il comprend un organe (14) de fermeture de palier une armature (16) réalisée en un matériau rigide et un guide d'air (18) ayant au moins une partie réalisée en un matériau plus souple que celui de l'armature (16).

2. Système (1) de gestion d'une entrée d'air (2) selon la revendication 1, **caractérisé en ce que** le guide d'air (18) est porté par l'armature (16) et la partie réalisée en matériau plus souple est disposée à l'opposée de la jonction entre l'armature (16) et le guide d'air (18).

3. Système (1) de gestion d'une entrée d'air (2) selon l'une quelconque des revendications précédentes, **caractérisé en ce que** l'intégralité du guide d'air (18) est réalisée en matériau plus souple que celui de l'armature.

4. Système (1) de gestion d'une entrée d'air (2) selon l'une quelconque des revendications précédentes, **caractérisé en ce que** le guide d'air (18) présente une forme de plaque.

5. Système (1) de gestion d'une entrée d'air (2) selon l'une quelconque des revendications précédentes, **caractérisé en ce que** le guide d'air (18) présente un coude.

6. Système (1) de gestion d'une entrée d'air (2) selon l'une quelconque des revendications précédentes, **caractérisé en ce que** le guide d'air (18) a une épaisseur comprise entre 1 et 10 mm.

7. Système (1) de gestion d'une entrée d'air (2) selon l'une quelconque des revendications précédentes, **caractérisé en ce que** l'armature (16) est réalisée en un plastique rigide, en particulier du polypropylène.

8. Système (1) de gestion d'une entrée d'air (2) selon l'une quelconque des revendications précédentes, **caractérisé en ce que** le guide d'air (18) est réalisé en un matériau choisi parmi :
- élastomère thermoplastique, en particulier élastomère thermoplastique oléfinique,
- un mélange d'élastomère thermoplastique comprenant de l'éthylène-propylène-diène monomère,
- du caoutchouc
- et/ou tout autre élastomère souple.

9. Système (1) de gestion d'une entrée d'air (2) selon l'une quelconque des revendications précédentes, **caractérisé en ce que** l'armature (16) comporte un corps allongé sur lequel est disposé le guide d'air (18).

10. Système (1) de gestion d'une entrée d'air (2) selon l'une quelconque des revendications précédentes, **caractérisé en ce que** l'armature (16) comporte une tête de fixation (22) pour permettre la fixation de l'armature (16) sur le système (1) de gestion d'une entrée d'air (2).

11. Système (1) de gestion d'une entrée d'air (2) selon l'une des revendications précédentes, **caractérisé en ce qu'**il comprend deux organes (14) de fermeture de palier identiques agencés pour fermer respectivement deux paliers du cadre (4).

12. Module de face avant pour véhicule automobile comprenant un échangeur de chaleur (6) et un encadrement portant ledit échangeur de chaleur (6) **caractérisé en ce qu'**il comprend en outre un système (1) de gestion d'une entrée d'air (2) selon l'une des revendications précédentes.

13. Module de face avant selon la revendication 12, **caractérisé en ce que** le guide d'air (18) est agencé pour venir en butée contre l'échangeur de chaleur (6).

## Patentansprüche

1. Steuersystem (1) eines Lufteinlasses (2) für einen Kraftfahrzeugvorderwagen, umfassend einen Rahmen (4) und mindestens eine Klappe (3), wobei der Rahmen (4) mindestens ein Lager umfasst, das dazu ausgestaltet ist, eine Welle (8) der Klappe (3) aufzunehmen, **dadurch gekennzeichnet, dass** es ein Lagerverschlusselement (14) umfasst, das eine Verstärkung (16) umfasst, die aus einem starren Material ausgeführt ist, und eine Luftführung (18), die mindestens einen Teil hat, der aus einem flexibleren Material als dem der Verstärkung (16) ausgeführt ist.

2. Steuersystem (1) eines Lufteinlasses (2) nach Anspruch 1, **dadurch gekennzeichnet, dass** die Luftführung (18) von der Verstärkung (16) getragen wird und der aus flexiblerem Material ausgeführte Teil entgegengesetzt zu der Verbindungsstelle zwischen der Verstärkung (16) und der Luftführung (18) angeordnet ist.

3. Steuersystem (1) eines Lufteinlasses (2) nach einem der vorhergehenden Ansprüche, **dadurch gekennzeichnet, dass** die gesamte Luftführung (18) aus einem flexibleren Material als dem der Verstärkung ausgeführt ist.

4. Steuersystem (1) eines Lufteinlasses (2) nach einem der vorhergehenden Ansprüche, **dadurch gekennzeichnet, dass** die Luftführung (18) eine Plattenform aufweist.

5. Steuersystem (1) eines Lufteinlasses (2) nach einem der vorhergehenden Ansprüche, **dadurch gekennzeichnet, dass** die Luftführung (18) eine Abwinklung aufweist.

6. Steuersystem (1) eines Lufteinlasses (2) nach einem der vorhergehenden Ansprüche, **dadurch gekennzeichnet, dass** die Luftführung (18) eine Dicke zwischen 1 und 10 mm hat.

7. Steuersystem (1) eines Lufteinlasses (2) nach einem der vorhergehenden Ansprüche, **dadurch gekennzeichnet, dass** die Verstärkung (16) aus einem starren Kunststoff ausgeführt ist, insbesondere Polypropylen.

8. Steuersystem (1) eines Lufteinlasses (2) nach einem der vorhergehenden Ansprüche, **dadurch gekennzeichnet, dass** die Luftführung (18) aus einem Material ausgeführt ist, das gewählt ist unter:
- einem thermoplastischen Elastomer, insbesondere einem olefinischen thermoplastischen Elastomer,
- einem Gemisch aus thermoplastischem Elastomer, das ein Ethylen-Propylen-Dien-Monomer umfasst,
- Kautschuk
- und/oder jedem anderen flexiblen Elastomer.

9. Steuersystem (1) eines Lufteinlasses (2) nach einem der vorhergehenden Ansprüche, **dadurch gekennzeichnet, dass** die Verstärkung (16) einen länglichen Körper beinhaltet, an dem die Luftführung (18) angeordnet ist.

10. Steuersystem (1) eines Lufteinlasses (2) nach einem der vorhergehenden Ansprüche, **dadurch gekennzeichnet, dass** die Verstärkung (16) einen Befestigungskopf (22) beinhaltet, um die Befestigung der Verstärkung (16) an dem Steuersystem (1) eines Lufteinlasses (2) zu ermöglichen.

11. Steuersystem (1) eines Lufteinlasses (2) nach einem der vorhergehenden Ansprüche, **dadurch gekennzeichnet, dass** es zwei identische Lagerverschlusselemente (14) umfasst, die dazu eingerichtet sind, jeweils zwei Lager des Rahmens (4) zu verschließen.

12. Vorderwagenmodul für ein Kraftfahrzeug, umfassend einen Wärmeaustauscher (6) und eine Einfassung, die den Wärmeaustauscher (6) trägt, **dadurch gekennzeichnet, dass** es ferner ein Steuersystem (1) eines Lufteinlasses (2) nach einem der vorhergehenden Ansprüche umfasst.

13. Vorderwagenmodul nach Anspruch 12, **dadurch gekennzeichnet, dass** die Luftführung (18) dazu eingerichtet ist, an dem Wärmeaustauscher (6) zur Anlage zu kommen.

## Claims

1. System (1) for managing an air inlet (2) for a front end of a motor vehicle comprising a frame (4) and at least one shutter (3), the frame (4) comprising at least one bearing configured to receive a shaft (8) of the shutter (3), **characterized in that** it comprises a bearing closure member (14) comprising a reinforcement (16) made from a rigid material and an air guide (18) having at least a part made from a material more flexible than that of the reinforcement (16).

2. System (1) for managing an air inlet (2) according to Claim 1, **characterized in that** the air guide (18) is borne by the reinforcement (16) and the part made from a more flexible material is positioned opposite to the junction between the reinforcement (16) and the air guide (18).

3. System (1) for managing an air inlet (2) according to either one of the preceding claims, **characterized in that** the entirety of the air guide (18) is made from a material more flexible than that of the reinforcement.

4. System (1) for managing an air inlet (2) according to any one of the preceding claims, **characterized in that** the air guide (18) is plate shaped.

5. System (1) for managing an air inlet (2) according to any one of the preceding claims, **characterized in that** the air guide (18) exhibits a bend.

6. System (1) for managing an air inlet (2) according to any one of the preceding claims, **characterized in that** the air guide (18) has a thickness comprised between 1 and 10 mm.

7. System (1) for managing an air inlet (2) according to any one of the preceding claims, **characterized in that** the reinforcement (16) is made from a rigid plastic, particularly polypropylene.

8. System (1) for managing an air inlet (2) according to any one of the preceding claims, **characterized in that** the air guide (18) is made from a material chosen from:
- thermoplastic elastomer, particularly thermoplastic olefin elastomer,
- a mixture of thermoplastic elastomers containing ethylene-propylene-diene monomer,
- rubber
- and/or any other flexible elastomer.

9. System (1) for managing an air inlet (2) according to any one of the preceding claims, **characterized in that** the reinforcement (16) comprises an elongate body on which the air guide (18) is positioned.

10. System (1) for managing an air inlet (2) according to any one of the preceding claims, **characterized in that** the reinforcement (16) comprises a fixing head (22) to allow the reinforcement (16) to be fixed to the system (1) for managing an air inlet (2).

11. System (1) for managing an air inlet (2) according to one of the preceding claims, **characterized in that** it comprises two identical bearing closure members (14) arranged for respectively closing two bearings of the frame (4).

12. Front-end module for a motor vehicle comprising a heat exchanger (6) and a surround bearing said heat exchanger (6), **characterized in that** it further comprises a system (1) for managing an air inlet (2) according to one of the preceding claims.

13. Front-end module according to Claim 12, **characterized in that** the air guide (18) is arranged to come into abutment against the heat exchanger (6).
